# EUROPEAN PATENT SPECIFICATION

(11) **EP 4 405 157 B1**
(45) Date of publication and mention of the grant of the patent: **21.01.2026**
(21) Application number: 22790457.0
(22) Date of filing: 16.09.2022
(51) Int. Cl.: B29C 49/00, B29B 11/14, B29C 49/64, C08G 63/00, B29C 49/06

(54) **METHOD FOR MANUFACTURING A BOTTLE**
VERFAHREN ZUR HERSTELLUNG EINER FLASCHE
PROCÉDÉ DE FABRICATION D'UNE BOUTEILLE

(30) Priority: 22.09.2021 EP 21198308
(43) Date of publication of application: 31.07.2024
(73) Proprietor: Société des Produits Nestlé S.A., 1800 Vevey (CH)
(72) Inventor: ZIMMER, Johannes, 1012 LAUSANNE (CH); POUTEAU, Charlyse, 88800 Vittel (FR); HENRIQUEL, Laurent, 88800 Epinal (FR); DURIE, Karson, Athens, GA 30605 (US)
(74) Representative: Rosolen-Delarue, Katell
(86) International application number: PCT/EP2022/075741
(87) International publication number: WO 2023/046582

(56) References cited:
- FR-A1- 2 724 588
- JP-A- 2009 045 877
- JP-A- H06 198 719
- US-A- 4 755 404
- US-A1- 2006 255 049
- US-A1- 2008 230 954
- US-A1- 2016 031 583
- US-A1- 2019 315 018
- "Polyhydroxybutyrate", WIKIPEDIA, 9 April 2014 (2014-04-09), XP055141395, Retrieved from the Internet <URL:http://en.wikipedia.org/w/index.php?title=Polyhydroxybutyrate&oldid=603421302> [retrieved on 20140919]
- ANONYMOUS: "Polyhydroxyalkanoates - Wikipedia", 9 February 2022 (2022-02-09), XP055904244, Retrieved from the Internet <URL:https://en.wikipedia.org/wiki/Polyhydroxyalkanoates> [retrieved on 20220322]

## Description

### Field of the invention

The present invention concerns the technical field of packaging, and more particularly of beverage packaging. The present invention concerns a method for manufacturing a bottle intended to store a liquid.

### Background of the invention

The bottles, used to store a product such as a liquid, that are commercially available are mainly manufactured starting from a preform to which a desired shape is given. The preform is a hollow element, generally having the shape of a test tube and made of a thermoplastic resin.

US 2016/031583 A1, US 2006/255049 A1 and US 2008/230954 A1 disclose preforms in accordance with the preamble of claim 1. JP H06 198719 A, FR 2 724 588 A1, JP 2009 045877 A and US 4 755 404 A relate to ratios as discussed in the characterizing portion of claim 1.

The bottles are usually manufactured by using a blow-moulding method. Two main methods are known: injection stretch blow moulding (ISBM) and extrusion blow moulding (EBM).

ISBM method comprises the following steps: injection, heating and stretch blow-moulding of a preform. The first step of injection of the ISBM method consists of injecting the thermoplastic resin in a mould such as to create the preform. Then, in the second step, the preform is heated at a temperature below their recrystallization point. Finally, in a third step, the bottle is created by blow-moulding the preform.

In most state of the art, the conventional thermoplastic resin to produce the preforms and thus further the bottles is Polyethylene terephthalate (PET). Even though being recyclable, conventional PET is neither bio-sourced nor biodegradable. Consequently, PET bottles or containers, that end up unintentionally in the environment will not naturally degrade and will hence further contribute to plastic pollution.

It is thus desirable to use a bio-sourced and biodegradable material instead of PET to reduce plastic pollution. Polyhydroxyalkanoates (PHA) is one particularly interesting bio-sourced and biodegradable.

However, ISBM is a thermo-mechanically complex process tailored for PET, which makes it difficult to replace PET by a bio-sourced and biodegradable material using the same advantageous process.

During the blow molding process, preforms for bottles and containers made from poly(ethylene terephthalate) (PET) are heated above the glass transition temperature (Tg), wherein there is little deformation of the preform from the original form. Glass transition temperature Tg refers to the point at which amorphous regions of a polymer are converted from a brittle, glasslike state to a rubbery, flexible form.

Additionally, PET will self-regulate blow molding, and as a result, the blow molded PET containers have a homogenous thickness distribution. PET-based preforms will however have different thicknesses along the preform to initiate the preform deformation at the right points and to contribute to the homogenous distribution of the material to the necessary parts of the bottle mold.

In the particular case of PHA, the latter has a different crystallization behavior and a much smaller processing window than PET.

For the PHA preforms to be pliable, the preforms must be heated near the melting temperature of PHA, which causes the PHA material to begin to flow and deform from the original design of the preform. PHA has a sticky behavior in the desired grade for ISBM. At this temperature, built in stresses from injection relax and the preform shrinks significantly. In a typical reheat stretch blow molding setup, with a preform design typically used in PET blow molding, a PHA preform will shrink down to nearly half its size once reheated to a temperature needed for pliability. Consequently, the stretch ratios are higher and blowing is more difficult. In addition, the shrinking is not axial-symmetric and the low preform stability in this shape complicates the transfer from oven or heating apparatus to blowing station.

Additionally, there is no self-regulation in PHA-based materials as there is with PET materials, so once the material becomes pliable, the PHA material flows irregularly, giving discrepancies in material distribution in the preform and in the final container. The irregular flow of the PHA preform is a problem as the preform will have thinner areas that are more prone to blow-outs or the container made from the PHA preforms will have thickness discrepancies throughout the container.

Finally, when reheating a PHA-based preform material, the PHA material absorbs a significant amount of the irradiation, with thicker areas requiring more heat to become pliable than thinner areas. With a PHA-based material molded into a PET-based preform, the different thicknesses along the length of the preform result in a temperature differential, which can cause the material to be more prone to blow-outs during the molding process.

This results in a bad blowing of the preform, a low process stability and a bad quality bottles (non homogeneous thickness, opaque, etc.).

In this context, US 20110024954 discloses the production of a PHA container using ISBM method. This document relates to a specific material composition that enables improved mechanical properties.

An alternative solution to produce PHA bottles is to use Extrusion Blow Molding (EBM). In extrusion blow molding, a continuous preform is vertically extruded, clamped into a cavity and blown up radially to form the bottle. The disadvantage of EBM however, is that there is less stretching during bottle production due to the absence of axial elongation. Molecular orientation is thus less present, which stiffens the material and enables low bottle thicknesses. Furthermore, there is more material waste in EBM due to trimming of the clamped parts after blowing and the neck production is less precise compared to the injected ISBM neck finish.

The current invention aims at using PHA in ISBM to manufacture a bottle without modifying the material composition.

### Summary of the invention

The invention is defined by the features of claim 1.

The invention concerns a method for manufacturing a bottle using a preform comprising an open neck portion at a first end, a closed base portion at a second end, and a body portion extending along a longitudinal axis between the neck portion and the base portion, said preform being made in Polyhydroxyalkanoates, said method for manufacturing comprising the following steps:
- heating the preform; and
- performing stretch blow molding of the preform.

According to the invention, the preform has a wall thickness which varies progressively between the body portion and the neck portion.

The progressive variation of the thickness between the body portion and the neck portion ensures a gentle transition between the body portion and the neck portion, or in other words a transition that is not abrupt. In particular, in the transition between the body portion and the neck portion, the preform has a wall thickness without any zone of additional thickness, groove or flange.

There is thus a reduction of significant thickness differences which are conventionally present at a transition area between the neck portion and body portion of the preform. Thanks to this configuration, the built-up of internal stresses during cooling is reduced, which results in avoiding preform shrinkage during re-heating.

Therefore, as the stretchability of the PHA is controlled during the manufacturing, a good quality bottle made in a biodegradable material is obtained while taking advantage of the ISBM method.

Finally, such a smooth transition between the neck portion and the body portion of the preform prevents the creation of massive zones under the neck of the bottle once manufactured, massive zones that are poorly biodegradable.

According to one embodiment, the wall thickness of the preform decreases progressively from the body portion to the neck portion.

Therefore, the neck portion tapers from the body portion. In other words, the preform has a side wall with a tapering region from the body portion into the neck portion.

According to the invention, the base portion and the body portion have a total longitudinal dimension taken along the longitudinal axis, a ratio between said longitudinal dimension and a thickness taken along any transverse cross-section being at least equal to 15, and preferably ranging between 15 and 40.

Thanks to this design, shrinkage of the preform is reduced to an acceptable minimum below 10%. This is particularly achieved at a given standard weight and diameter of bottle, for example for bottles having a volume between 0.5 liter and 1.5 liters.

According to one embodiment, the method for manufacturing comprises:
- transferring the heated preform into a bottle-shaped mould;
- stretching the preform along the longitudinal axis by means of a longitudinal rod; and
- blow-moulding the preform by injecting air in two steps so as to make the heated preform stretch and take the shape of the bottle-shaped mould, the air being injected at a first pressure then at a second pressure higher than said first pressure.

According to one embodiment, said body portion comprises at least three zones extending longitudinally, said zones presenting a greater thickness than the rest of the body portion.

Adding longitudinal zones of additional thickness to the preform lead to a reduction of the preform shrinkage and a stabilization of the preform during heating. Moreover, this way, an axisymmetric preform is obtained at the end of the heating phase, which is advantageous during transfer of the preform from the oven to the blowing unit.

According to one embodiment, the thickness of said zones is at most 30 % greater than a minimum thickness of the body portion.

As PHA has a much smaller processing window in heating the preform compared to PET, this feature enables a better control of the crystallization of the preform.

According to one embodiment, said zones are projected zones of an inner surface of the body portion.

According to one embodiment, the thickness of the body portion is at least equal to 1.5 millimetres, said thickness preferably ranging between 1.5 millimetres and 5 millimetres, and more preferably between 1.5 millimetres and 3.5 millimetres.

This prevents the built up of internal stresses during injection of PHA when forming the perform.

In another aspect, the invention also relates to a bottle manufactured by the method having the previously described features.

### Brief description of the drawings

Additional features and advantages of the present invention are described in, and will be apparent from, the description of the presently preferred embodiments which are set out below with reference to the drawings in which:
**Figures 1a****,** **1b, 1c** represent different views of a preform according to an embodiment of the invention;
**Figures 2a, 2b****,** **2c** are cross-sectional views of first, second and third preforms of different size made from PHA material;
**Figure 2d** is a three dimensional view of the three preforms of figures 2a-2c;
**Figure** 3 is a three dimensional view of the first preform before reheating and examples of the first preform after reheating;
**Figure 4** is a three dimensional of free-blown articles made from the first preforms of figure 3;
**Figure** 5 is a graphical representation of temperature profiles for reheating the first preform of figure 3;
**Figure** 6 is a three dimensional view of the second preform before reheating and examples of the second preform after reheating;
**Figure 7** is a three dimensional of free-blown articles made from the second preform of figure 6;
**Figure 8** is a graphical representation of temperature profiles for reheating the second preform of figure 6;
**Figure 9** is a three-dimensional view of the third preform before reheating and examples of the third preform after reheating;
**Figure 10** is a three-dimensional of free-blown articles made from the third preform of figure 9;
**Figure 11** is a graphical representation of temperature profiles for reheating the third preform of figure 9;
**Figure 12** is a three-dimensional view showing size comparisons between the first, second and third preforms before and after reheating;
**Figure 13** is a three-dimensional view showing the first, second and third preforms after reheating;
**Figures 14a****,** **14b** represent different views of a preform according to another embodiment of the invention;
**Figure 15** represents steps of a technique of blow-moulding a preform;
**Figure 16a, 16b** represent a bottle manufactured using the preform of figures 1a-1c.

### Detailed description of the invention

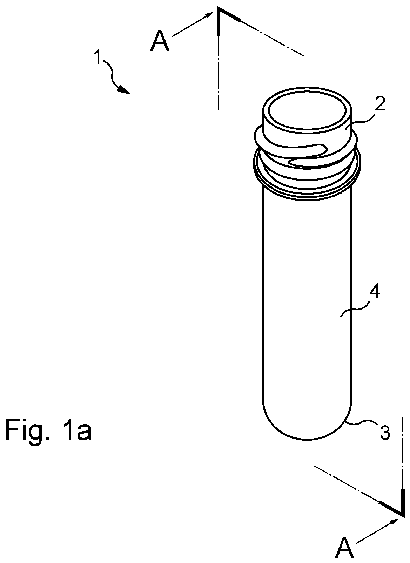

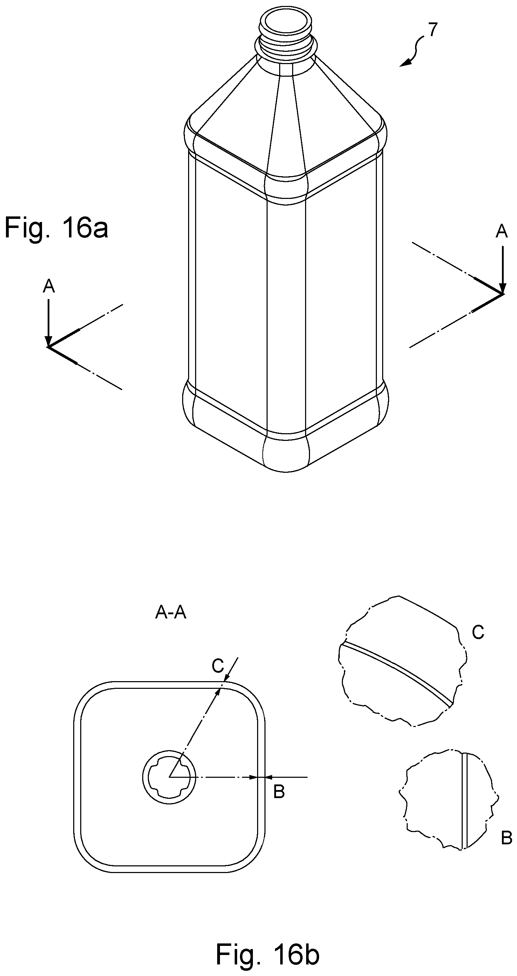

Figure 1a represents an example of a preform 1 according to an embodiment of the invention and which can be used to manufacture a bottle such as the one depicted at figure 16a. The bottle can be cylindrical or can have another shape such as a prismatic shape.

The preform 1 is made in Polyhydroxyalkanoates (PHA).

The PHA used can have random monomeric repeating units having of the formula : 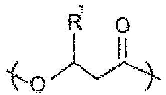 wherein R¹ is selected from the group consisting of CH₃ and a C₃ to C₁₉ alkyl group.

PHAs comprise the Polyhydroxybutyrates (PHB), for example polyhydroxyvalerate (PHV) and polyhydroxyhexanoate (PHH), and mixtures of materials among the PHAs.

To form a PHA bottle according to the invention, a particular grade of Polyhydroxyalkanoate (PHA) is provided. This PHA is, for example, a poly(hydroxybutyrate-co-hydroxyhexanoate) (PHBHH) containing 97 mol % of polyhydroxybutyrate (PHB) and 3 mol % of polyhydroxyhexanoate PHH.

This plastic can be supplied for example in the form of granules suitable for being melted for use in a conventional injection process.

The PHA that is used should be highly biodegradable, depending on the design of the container, and can be even compostable. "Compostable" designates a material that meets the following requirements: the material is capable of being processed in a composting facility for solid waste; if so processed, the material will end up in the final compost; and if the compost is used in the soil, the material will ultimately biodegrade in the soil according to the standard ASTM D6400 for industrial and home compostability.

The preform 1 comprises a neck portion 2, a base portion 3 and a body portion 4. The body portion 4 extends between the neck portion 2 and the base portion 3, along a longitudinal axis A1. The preform 1 is axisymmetric.

The preform 1 presents the shape of a test tube.

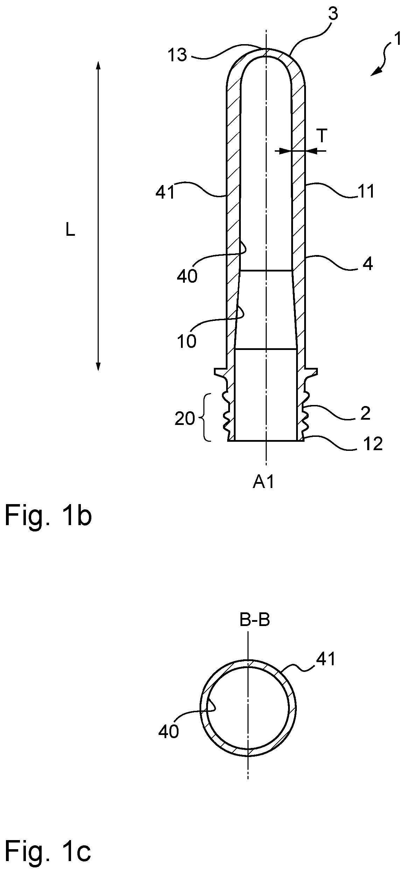

The preform 1 has an inner surface 10 and an outer surface 11 (visible on figure 1b).

The neck portion 2 extends at an open first end 12 of the preform 1. The neck portion 2 has a substantially tubular shape.

The neck portion 2 comprises a threaded part 20. Once the bottle manufactured starting from the preform 1, the threaded part 20 is intended to cooperate with a threaded top able to close the bottle.

The base portion 3 extends at a closed second end 13 of the preform 1. The base portion 3 has a substantially hemispherical shape. The base portion 3 can present a different shape, such as a substantially conical shape, in other embodiments.

The body portion 4 comprises a wall having an inner surface 40 and an outer surface 41. The body portion 4 has here a tubular shape. The inner surface 40 and the outer surface 41 have thus a substantially circular cross-section.

Figure 1b represents a longitudinal cross-section view taken along lines A-A of figure 1a. Figures 1c represent a transverse cross-section view taken respectively along lines B-B of figure 1b.

In this embodiment, the body portion 4 has a homogeneous thickness T along any transverse cross-section. Thickness shall mean the dimension taken along a transverse cross-section. In other words, the dimension taken between the inner surface 40 and the outer surface 41 of the body portion 4 is constant across any transverse cross-section. The inner surface 40 and the outer surface 41 of the body portion 4 have thus coaxial longitudinal axis which coincide with the longitudinal axis A1 of the preform 1.

Preferably, the thickness T of the body portion 4 ranges between 1.5 millimetres and 5 millimetres, and preferably between 1.5 millimetres and 3.5 millimetres.

An advantage of using a PHA preform having a uniform wall thickness throughout the body portion is that the uniform wall thickness helps to keep the temperature consistent throughout the preform during heating and melting.

A preform with a body portion having a thickness T of at least 1.5 millimeters prevents the built up of internal stresses during injection of PHA when molding the preform. Moreover, it avoids leading to increased preform heights at equal weight.

The preform 1 has a thickness which varies progressively between the body portion 4 to the neck portion 2.

The neck portion 2 tapers from the body portion 4. In other words, the preform has a side wall with a tapering region from the body portion into the neck portion. There is thus a smooth thickness transition from neck portion to the body. The transition or transition area corresponds to the tapering region of the side wall into the neck.

Each of the base portion 3 and the body portion 4 has a length or longitudinal dimension. The base portion 3 and the body portion 4 have length or longitudinal dimension L, which corresponds to the sum of the length of the base portion 3 and the length of the body portion 4. The length or longitudinal dimension L refers to the dimension of the preform 1 taken along the longitudinal axis A1.

Preferably, the total length of the base portion 3 and the body portion 4 ranges between 75 millimetres and 120 millimetres.

Advantageously, a ratio between the longitudinal dimension of the base portion 3 and the body portion 4 and a thickness taken along any transverse cross-section being at least equal to a predefined value. Said ratio is at least equal to 15. Preferably, said ratio ranges between 15 to 40 for a standard weight and diameter bottle.

In some embodiments, the preform, after being reheated, has a final mass to height ratio ranging from about 0.4 to about 0.5 grams/mm.

Advantageously, the preform is relatively short and have a relatively high mass to height ratio. This is particularly obtained with the values presented above for the length and mass to height ratio. The relatively short, relatively thick preform provides more consistent and repeatable results, deforming less after reheating. Additionally, the short, thick preforms give better regulation of material flow in the container mold during blowing, as there are less differences in material temperature throughout the preform, giving less areas that are prone to blow-out throughout the material.

The shape of the preform 1 can also be optimised for PHA stretch blow moulding by a design choice of diameter to length. More particularly, the diameter of the preform 1 is comprised between 25% and 50% of the length of the body portion and base portion, preferably around 33% of said length. The diameter of the preform 1 shall refer to an inside diameter of the body portion 4.

This means that the preform 1 is shorter with greater diameter compared to a conventional preform. More importantly, because the body portion 4 and the base portion 3 are deformed during the step of performing a stretch blow moulding of the preform while the neck portion 2 is essentially not deformed, the preform has a diameter comprised between 30% and 60% of the length of the body portion and base portion, measured along the longitudinal axis (A1), preferably around 45% of said length.

Such a PHA preform is thus configured to require a lower ratio of axial to radial stretch to take the final shape of the formed container, compared to a corresponding PET preform adapted to form a container having the same shape.

Experimentations were performed using preforms having different lengths, thicknesses and diameters in or order to determine how the thickness and length of the preform affects the performance of the preform.

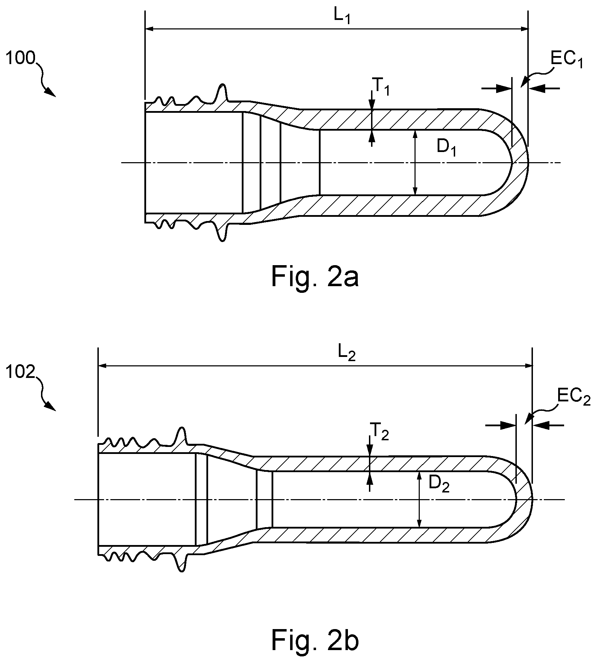

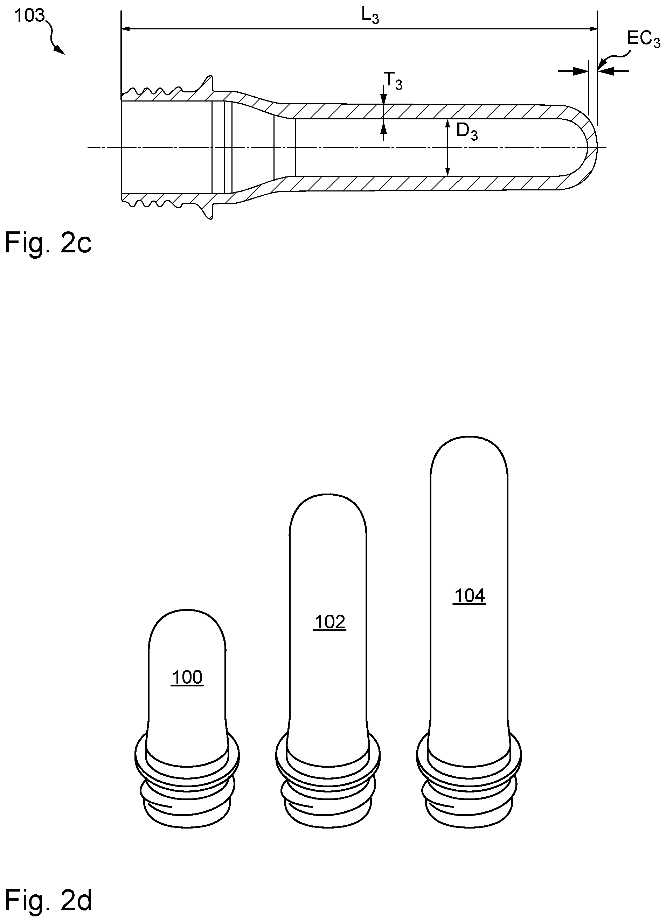

More specifically, three preforms 100, 102, 104 of different lengths as shown in figures 2a-2d were made from 20 grams of PHA material. Preform 100 has an overall length L1 of 81 mm, a uniform wall thickness T1 of the body portion of 4.14 mm, an inside diameter D1 of the body portion of 14 mm, and an end cap thickness (or base portion thickness) EC1 of 3.1 mm. Preform 102 has an overall length L2 of 101 mm, a uniform wall thickness T2 of the body portion of 3.07 mm, an inside diameter D2 of the body portion of 13.1 mm, and an end cap thickness (or base portion thickness) EC2 of 2.5 mm. Preform 14 has an overall length L3 of 111 mm, a uniform wall thickness T3 of the body portion of 2.72 mm, an inside diameter D3 of the body portion of 13.7 mm, and an end cap thickness (or base portion thickness) EC3 of 2.2 mm. The preforms were heated in an oven having ten heating zones until the preforms were sufficiently pliable to blow the preforms.

Different oven temperature settings were used for each preform because of the different wall thicknesses of the preforms 100, 102 and 104. The oven settings were tuned for each preform in order to find the best oven temperatures that provided repeatable free-blow results. The oven temperature settings (displayed as the % power of the lamp in each heating zone) used are given in the following table.

**Table 1**

| Temperature zone | Preform 100 | Preform 102 | Preform 104 |
|---|---|---|---|
| Zone 1 | 90 | 85 | 75 |
| Zone 2 | 40 | 35 | 30 |
| Zone 3 | 50 | 50 | 50 |
| Zone 4 | 80 | 80 | 80 |
| Zone 5 | 100 | 100 | 100 |
| Zone 6 | 100 | 100 | 100 |
| Zone 7 | 0 | 0 | 100 |
| Zone 8 | 0 | 0 | 0 |
| Zone 9 | 0 | 0 | 0 |
| Zone 10 | 0 | 0 | 0 |
| Overall | 95 | 77 | 68 |

As shown by the following figures, oven settings that provided enough heat to induce pliability sufficient for free blow preforms resulted in deformation of the preforms. The thinner, longer preforms 102 and 104 required less heat as evidenced by the overall oven settings. The preform 104 also required zone 7 to be used in order to adequately heat the end cap due to the length of the preform.

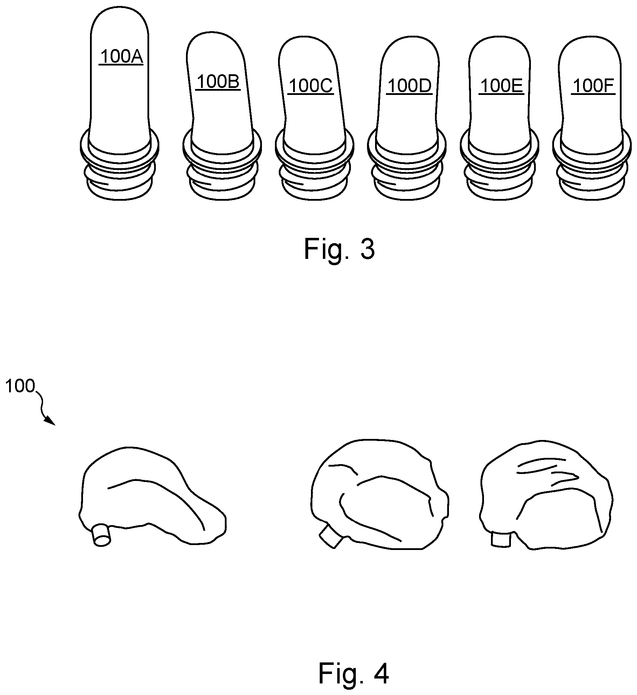

Figure 3 illustrates repeat examples of the preform 100A before reheating, and the deformation of the preform 100A after reheating 100B-100F. Preform 100 experienced minimal shrinking upon reheating, but was still able to be blown into large free-blown articles as shown in figure 4. The deformation of preform 100 was small and did not result in the preform falling to one side in the oven.

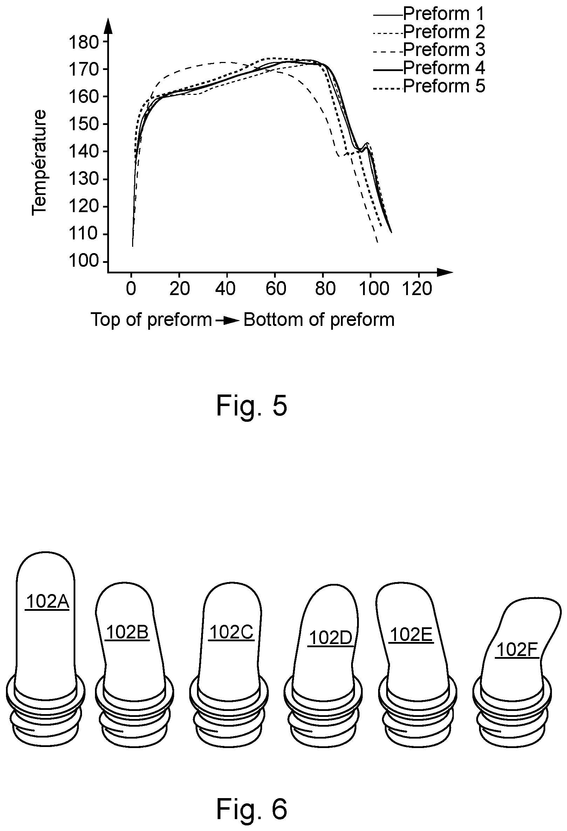

The following Table 2 and figure 5 show the temperature profile for different zones of several preforms 100, with zone 1 being the top of the preform. The inside temperature of the preforms was measured with a digital programmable thermal sensor and the outside temperature of the preforms was measured with a forward-looking infrared radar camera (FLIR). It was observed that the inside of the preforms was colder than the outside and that the temperature differential between the inside and the outside of was about 10 °C and increased consistently throughout the length of the preform 100. The inside temperature in degrees °C of preforms 100 for different zones along the length of the preforms is given in the following table.

**Table 2**

| Preform 100 | Zone 1 | Zone 2 | Zone 3 | Zone 4 |
|---|---|---|---|---|
| 100B | 151 | 154 | 159 | 97 |
| 100C | 158 | 158 | 158 | 98 |
| 100D | 149 | 161 | 160 | 99 |
| 100E | 157 | 152 | 157 | 97 |
| 100F | 157 | 157 | 157 | 97 |
| Average | 154.4 | 156.4 | 158.2 | 97.6 |

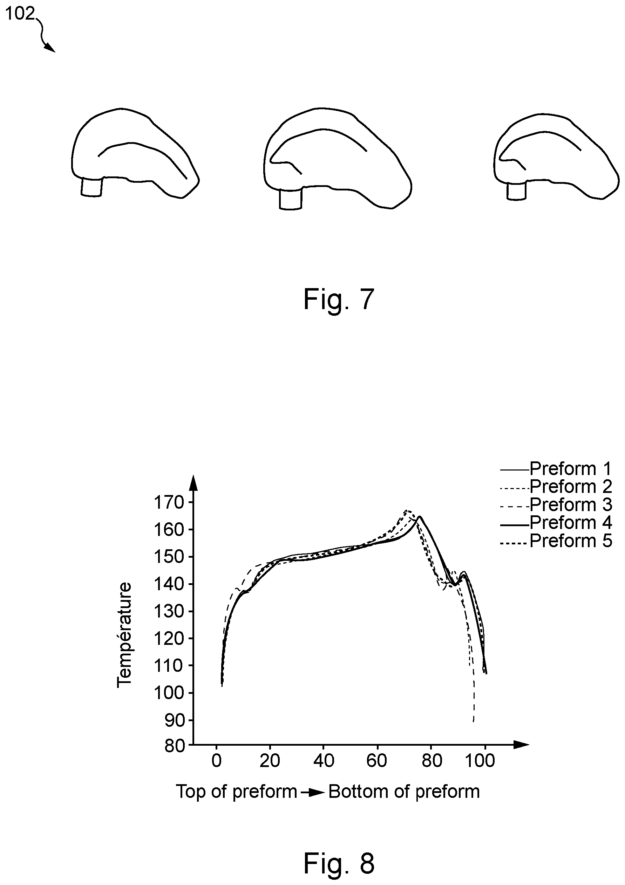

As seen in the foregoing table, the temperature inside the preform was consistent throughout the length of the preform, which gives consistent pliability and helps avoid areas prone to blow-outs. Figure 6 illustrates repeat examples of the preform 102A before reheating, and the deformation of the preform 102A after reheating 102B-102F. Preform 102 experienced significant shrinking upon reheating, but was still able to be blown into free-blown articles (figure 7) that were smaller than the free-blown articles of figure 4. The deformation of preform 102 was greater than that of preform 100 but did not result in the preform falling to one side in the oven.

The following Table 3 and figure 8 show the temperature profile for different zones of several preforms 102, with zone 1 being the top of the preform. The inside temperatures of the preforms were colder toward to the top of the preforms and hotter toward the bottom of the preforms. There was a temperature differential throughout the length of the preforms, which resulted in areas prone to blowouts. Weak areas in the preform prevent successful freeblowing of large articles (like figure 4) or blow molding containers from the preforms. The difference between the inside temperature and the outside temperature of the preforms changed depending on the location along the length of the preforms. The inside temperature in degrees C of preforms 102 for different zones along the length of the preforms is given in the following table.

**Table 3**

| Preform 102 | Zone 1 | Zone 2 | Zone 3 | Zone 4 |
|---|---|---|---|---|
| 102 B | 167 | 166 | 157 | 81 |
| 102C | 164 | 162 | 158 | 82 |
| 102D | 161 | 161 | 157 | 80 |
| 102E | 163 | 163 | 158 | 81 |
| 102F | 168 | 159 | 155 | 80 |
| Average | 164.6 | 162.2 | 157.0 | 80.8 |

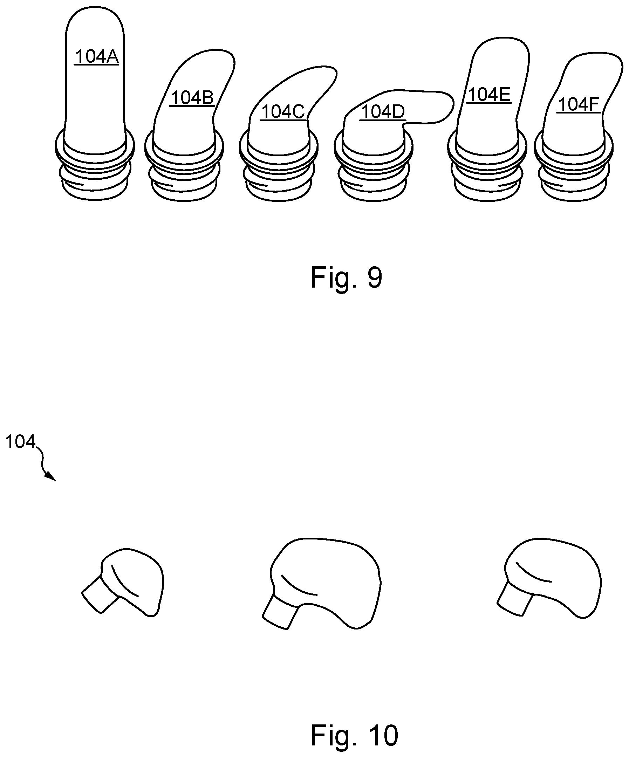

Figure 9 illustrates repeat examples of the preform 104A before reheating, and the deformation of the preform 104A after reheating 104B-104F. Preform 104 experienced significant shrinking and deformation upon reheating. Free-blown articles made from the preforms 104 (figure 10) were smaller than the free-blown articles figures 4 and 7. The preforms 104 repeatedly touched the oven or fell over during reheating. A lower oven temperature was attempted to be used, but resulted in the preform 104 being unable to be pliable.

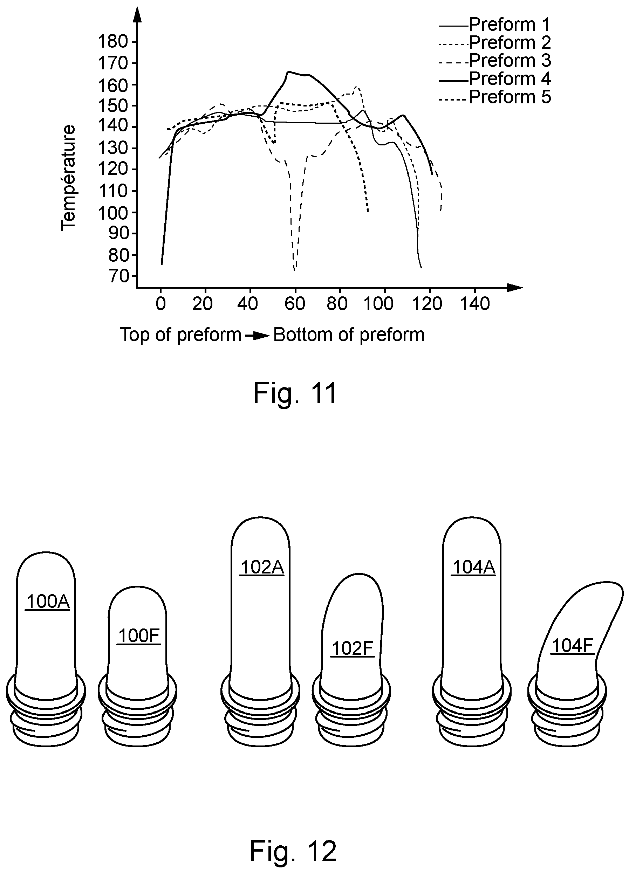

The following Table 4 and figure 11 show the temperature profile for different zones of several preforms 104, with zone 1 being the top of the preform. It was difficult to reliably measure the temperature profiles of the preforms 104 due to the preforms 104 falling over or leaning to one side during reheating. The inside temperature in degrees °C of preforms 104 for different zones along the length of the preforms is given in the following table.

**Table 4**

| Preform 104 | Zone 1 | Zone 2 | Zone 3 | Zone 4 |
|---|---|---|---|---|
| 104B | 163 | 155 | 144 | 77 |
| 104C | 167 | 151 | 151 | 81 |
| 104D | 155 | 142 | 143 | 78 |
| 104E | 152 | 162 | 1149 | 80 |
| 104F | 79 | 51 | 140 | 79 |
| Average | 159.3 | 152.5 | 146.8 | 79.0 |

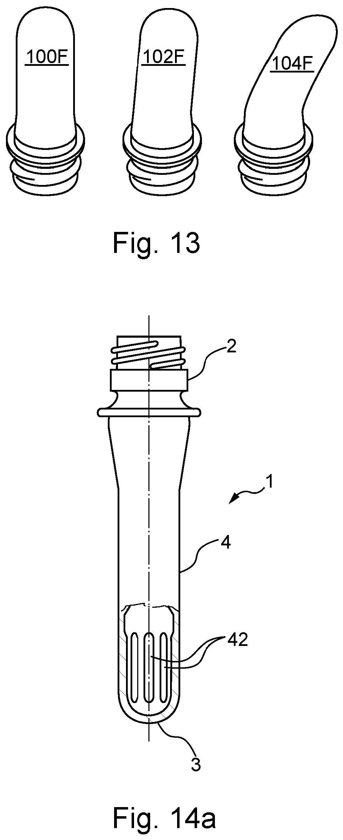

Figures 12 and 13 provide a comparison of each of the preforms 100, 102 and 104 before and after reheating. The bodies of preform 100 and preform 102 both shrunk to about 46 to 50 mm, while preform 104 was not able to be measured reliably due to the preform falling to one side or touching the oven;

Based on the foregoing examples, it was observed that the preform design is important for controlling deformation of the preform during reheating. The shortest preform 100 deformed less than the taller preforms 102 and 104, but was still pliable and had less deformation upon reheating. The longer preforms 102 and 104 had more issues with uniformity and repeatability during reheating. The shorter preform 100 with thicker walls made bigger free-blown articles and was less prone to blow outs during reheating compared to the taller preforms 102 and 104. Preform 100 also had more uniformity of material distribution during reheating than preforms 102 and 104. During reheating, preform 100 had a colder inside temperature but also a smaller temperature differential throughout the length of the preform than preforms 102 and 104. Preforms 102 and 104 had much greater temperature differentials throughout the length of the preforms during reheating.

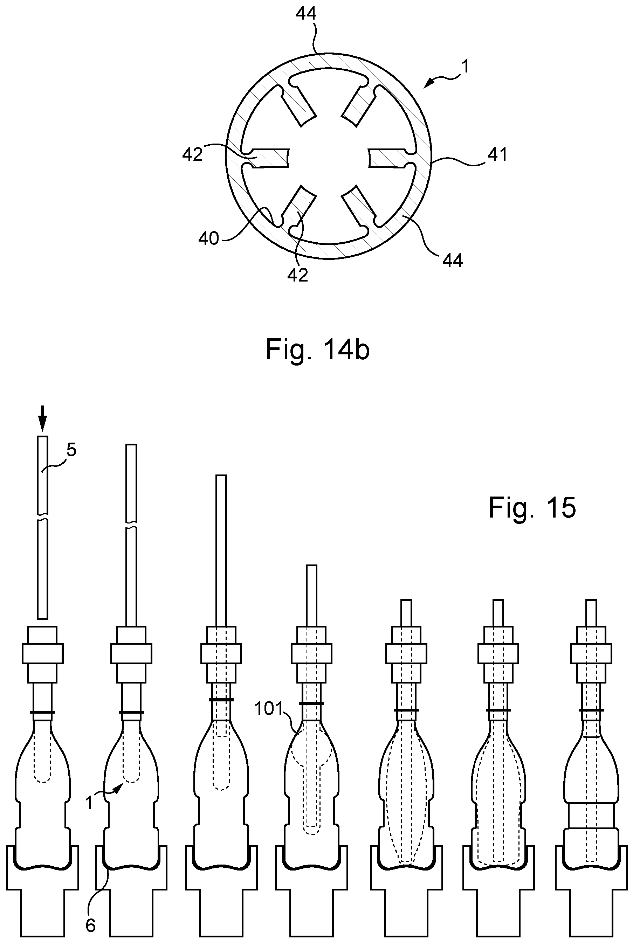

Figures 14a, 14b represent another embodiment close to that of figures 1a-1c. The body portion 4 comprises here zones 42 of additional thickness. The body portion 4 comprises at least three zones 42 of additional thickness.

The thickness of the body portion 4 varies transversally, or along transverse-cross sections. As visible on figure 14b, the thickness of the body portion 4 is higher at the zones 42 than in the rest of the body portion 4. The zones 42 present here the same thickness.

The rest of the body portion 4 also has the same thickness which is thinner than that of the zones 42. The rest of the body portion 4 shall be understood as referring to intermediate zones 44 extending between the zones 42 of additional thickness.

The zones 42 extend longitudinally. The zones 42 are here projected zones of the inner surface 40. The zones 42 present the shape of longitudinal bumps.

In another example, the zones 42 can be projected zones of the outer surface 41 of the body portion 4.

The thickness T of the body portion 4 varies here substantially similarly along any transverse cross-section. Of course, in another embodiment, the thickness of the body portion can vary differently from a transverse cross-section to another.

The number and disposal of the zones 42 of additional thickness can vary. For example, the zones 42 can be arranged relative to one another in a polygonal array.

Preferably, the zones 42 are arranged at equal angular distance around the longitudinal axis A1.

In the represented embodiment, the zones 42 of additional thickness do not extend until the base portion 3. Indeed, a space is kept between a bottom 30 of the preform 1 located at the base portion 3 and the four zones 42.

In another embodiment, the zones 42 of additional thickness can extend from a first end 43 adjacent to the neck portion 2, to the base portion 3.

The zones 42 enable a better stabilization of the preform during heating, therefore avoiding shrinkage.

The thickness of the zones 42 is at most 30 % greater than a minimum preform body thickness.

It shall be noted that the dimensions and design of the preform according to the embodiment of figures 14a, 14b are the same as the one described above with respect to figures 1a-1c, especially for the thickness, length and ratios of the preform. The only difference resides then in the zones 42 of additional thickness.

In order to manufacture a bottle starting from the preform 1, the followings steps of ISBM method can be completed.

First, the thermoplastic resin, here PHA, is injected in a mould such as to create the preform 1.

Second, the preform 1 is heated at a temperature below their recrystallization point. PHA is brought above its Glass Transition Temperature Tg and almost at its melting temperature Tm. A preferred heating temperature is from about 150°C to about 170° C.

The temperature process window of the PHA material is narrow. This window is smaller than for PET. In fact, a PET preform is heated to a lower temperature and has a larger process window (i.e. 80°C to 120°C).

The heating temperature must be precise, due to the very narrow vitreous transition range of the PHA. More particularly, depending on the PHA grade, in the heating step the material is heated to a temperature comprised between 1°C and 8°C under the melting temperature of the PHA used in the process.

This way, the preform 1 is heated to a temperature at which the preform becomes soft enough to be stretched and blown

The heating step may be done using a heating apparatus comprising for example hallogen lamps or infrared heating. The preform 1 is introduced into the heating apparatus and oriented prior to enter the heating apparatus for example by a mechanical block or any appropriate device. The preform 1 is oriented towards holding means of the heating apparatus.

The heating conditions are selected so as to heat the inner surface 10 of preform 1 to a suitable molding temperature without overheating the outer surface 11. For example, thicker zones may be heated at a higher power level than thinner ones.

Finally, in a third step, the bottle is created by blow-moulding the preform 1. More precisely, the preform 1 is mechanically stretched, blown and expanded into a bottle-shaped mould 6 to stretch the preform axially and radially, and form a bottle.

The third step of blow-moulding is a two-step process is illustrated at figure 15. First the preform 1 is stretched using a cylindrical rod 5. This enables thus an axial and mechanical stretching. The cylindrical rod 5 also helps stabilizing the preform in the proper orientation in the bottle-shaped mould 6.

Furthermore, radial using injection of compressed gas into the preform is performed. Air is first blown at a low pressure; the preform 1 is thus pre-blown. A bubble 101 starts to form in the middle of the preform 1 and continues to get larger until a pre-bottle is formed. The pre-bottle is slightly smaller than the bottle-shaped mould 6. Such a pre-blowing or preliminary blowing of the preform makes room for the cylindrical rod 5, which can then be inserted. It is also useful to allow nucleation of the amorphous material so that it may develop greater crystallinity as it cools after stretching.

Finally, the preform is axially stretched by the rod and immediately afterward is blown with more gas to complete the blow molding operation. In fact, high pressure blown air is used to finish blowing the pre-bottle out against an inside wall of the bottle shaped-mould 6. Air blowing forces the resin outward to contact interior surface of the bottle-shaped mould 6. This results in a shaped article or bottle with extemal dimensions complementary to internal dimensions and shape of the bottle-shaped mould 6.

During the ISBM process, the neck portion 2 is unaffected by the blow molding operation while the bottom portion 3 and the body portion 4 of the preform are stretched and thinned.

The ISBM applied to the described PHA preform enables the production of dimensionally-stable biodegradable bottles having less shrinkage in height and diameter than bottles prepared using a standard PHA preform (i.e. having a conventional shape). The bottle disclosed has reduced heat deformation or shrinkage compared to a bottle that coulb be made from a PHA standard preform.

Figure 16a represent a bottle 7 according to an embodiment manufactured using the method for manufacturing of the invention.

A transverse cross-section of figure 16a as well as the homogeneous thickness of the bottle are for instance depicted in figure 16b. Thanks to the method for manufacturing a bottle according to the invention, the bottle 7 presents a homogenous thickness compared to if the bottle were manufactured with a standard preform in PHA.

The invention thus proposes a solution for manufacturing a light and biodegradable bottle having a homogeneous thickness, and which has good mechanical properties.

## Claims

1. A method for manufacturing a bottle, using a preform (1) comprising an open neck portion (2) at a first end (12), a closed base portion (3) at a second end (13), and a body portion (4) extending along a longitudinal axis (A1) between the neck portion (4) and the base portion (3), said preform (1) being made in PHA, said method for manufacturing comprising the following steps:
- heating the preform (1); and
- performing stretch blow molding of the preform (1), wherein the preform (1) has a wall thickness which varies progressively between the body portion (4) and the neck portion (2), **characterized in that**
the base portion (3) and the body portion (4) have a total longitudinal dimension (L) taken along the longitudinal axis (A1), a ratio between said longitudinal dimension (L) and a thickness taken along any transverse cross-section being at least equal to 15, and preferably ranging between 15 and 40.

2. Methd for manufacturing a bottle according to claim 1, wherein the wall thickness of the preform (1) decreases progressively from the body portion (4) to the neck portion (2).

3. Method for manufacturing a bottle according to claim 1 or claim 2 , wherein said body portion (4) comprises at least three zones (42) extending longitudinally, said zones (42) presenting a greater thickness than the rest of the body portion (4).

4. Methd for manufacturing a bottle according to claim 3, wherein the thickness of said zones (42) is at most 30 % greater than a minimum thickness of the body portion (4).

5. Method for manufacturing a bottle according to claim 3 or claim 4, wherein said zones (42) are projected zones of an inner surface (40) of the body portion (4).

6. Method for manufacturing a bottle according to any one of claims 1 to 5, wherein the thickness (T) of the body potion (4) is at least equal to 1.5 millimetres, said thickness (T) preferably ranging between 1.5 millimetres and 5 millimetres, and more preferably between 1.5 millimetres and 3.5 millimeters.

7. Method for manufacturing a bottle according to any one of claims 1 to 6, wherein the method comprises the steps of:
- transferring the heated preform (1) into a bottle-shaped mould (6);
- stretching the preform (1) along the longitudinal axis by means of a longitudinal rod (5); and
- blow-moulding the preform (1) by injecting air in two steps so as to make the heated preform (1) stretch and take the shape of the bottle-shaped mould (6), the air being injected at a first pressure then at a second pressure higher than said first pressure.

## Patentansprüche

1. Verfahren zum Herstellen einer Flasche unter Verwendung eines Vorformlings (1), umfassend einen offenen Halsabschnitt (2) an einem ersten Ende (12), einen geschlossenen Basisabschnitt (3) an einem zweiten Ende (13) und einen Körperabschnitt (4), der sich entlang einer Längsachse (A1) zwischen dem Halsabschnitt (4) und dem Basisabschnitt (3) erstreckt, wobei der Vorformling (1) aus PHA gefertigt ist, das Verfahren zum Herstellen umfassend die folgenden Schritte:
- Erhitzen des Vorformlings (1); und
- Durchführen eines Streckblasformens des Vorformlings (1),
wobei der Vorformling (1) eine Wandstärke aufweist, die zwischen dem Körperabschnitt (4) und dem Halsabschnitt (2) zunehmend variiert,
**dadurch gekennzeichnet, dass** der Basisabschnitt (3) und der Körperabschnitt (4) eine Gesamtlängsabmessung (L) entlang der Längsachse (A1) aufweisen, ein Verhältnis zwischen der Längsabmessung (L) und einer Dicke, die entlang eines beliebigen Querschnitts genommen wird, mindestens gleich 15 ist und vorzugsweise in dem Bereich zwischen 15 und 40 liegt.

2. Verfahren zum Herstellen einer Flasche nach Anspruch 1, wobei die Wanddicke des Vorformlings (1) von dem Körperabschnitt (4) zu dem Halsabschnitt (2) hin zunehmend abnimmt.

3. Verfahren zum Herstellen einer Flasche nach Anspruch 1 oder 2, wobei der Körperabschnitt (4) mindestens drei Zonen (42), die sich in Längsrichtung erstrecken umfasst, wobei die Zonen (42) eine größere Dicke darstellen als der Rest des Körperabschnitts (4).

4. Verfahren zum Herstellen einer Flasche nach Anspruch 3, wobei die Dicke der Zonen (42) höchstens 30 % größer als eine Mindestdicke des Körperabschnitts (4) ist.

5. Verfahren zum Herstellen einer Flasche nach Anspruch 3 oder 4, wobei die Zonen (42) vorstehende Zonen einer Innenoberfläche (40) des Körperabschnitts (4) sind.

6. Verfahren zum Herstellen einer Flasche nach einem der Ansprüche 1 bis 5, wobei die Dicke (T) des Körperabschnitts (4) mindestens gleich 1,5 Millimeter ist, die Dicke (T) vorzugsweise in dem Bereich zwischen 1,5 Millimeter und 5 Millimeter und mehr bevorzugt zwischen 1,5 Millimeter und 3,5 Millimeter liegt.

7. Verfahren zum Herstellen einer Flasche nach einem der Ansprüche 1 bis 6, wobei das Verfahren die Schritte umfasst:
- Überführen des erhitzten Vorformlings (1) in eine flaschenförmige Form (6);
- Strecken des Vorformlings (1) entlang der Längsachse mittels einer Längsstange (5); und
- Blasformen des Vorformlings (1) durch Einblasen von Luft in zwei Schritten, um den erhitzten Vorformling (1) zu strecken und die Form der flaschenförmigen Form (6) anzunehmen, wobei die Luft mit einem ersten Druck, dann mit einem zweiten Druck, der höher als der erste Druck ist, eingeblasen wird.

## Revendications

1. Procédé permettant de fabriquer une bouteille, à l'aide d'une préforme (1) comprenant une partie de col ouverte (2) au niveau d'une première extrémité (12), une partie de base fermée (3) au niveau d'une seconde extrémité (13), et une partie de corps (4) s'étendant le long d'un axe longitudinal (A1) entre la partie de col (4) et la partie de base (3), ladite préforme (1) étant faite en PHA, ledit procédé de fabrication comprenant les étapes suivantes :
- le chauffage de la préforme (1) ; et
- la réalisation d'un moulage par étirage-soufflage de la préforme (1),
dans lequel la préforme (1) présente une épaisseur de paroi qui varie progressivement entre la partie de corps (4) et la partie de col (2),
**caractérisé en ce que** la partie de base (3) et la partie de corps (4) présentent une dimension longitudinale totale (L) prise le long de l'axe longitudinal (A1), un rapport entre ladite dimension longitudinale (L) et une épaisseur prise le long de toute section transversale étant au moins égal à 15, et de préférence compris entre 15 et 40.

2. Procédé de fabrication d'une bouteille selon la revendication 1, dans lequel l'épaisseur de paroi de la préforme (1) diminue progressivement de la partie de corps (4) à la partie de col (2).

3. Procédé de fabrication d'une bouteille selon la revendication 1 ou la revendication 2, dans lequel ladite partie de corps (4) comprend au moins trois zones (42) s'étendant longitudinalement, lesdites zones (42) présentant une épaisseur plus importante que le reste de la partie de corps (4).

4. Procédé de fabrication d'une bouteille selon la revendication 3, dans lequel l'épaisseur desdites zones (42) est supérieure d'au plus 30 % à une épaisseur minimale de la partie de corps (4).

5. Procédé de fabrication d'une bouteille selon la revendication 3 ou la revendication 4, dans lequel lesdites zones (42) sont des zones projetées d'une surface intérieure (40) de la partie de corps (4).

6. Procédé de fabrication d'une bouteille selon l'une quelconque des revendications 1 à 5, dans lequel l'épaisseur (T) de la partie de corps (4) est au moins égale à 1,5 millimètres, ladite épaisseur (T) étant de préférence comprise entre 1,5 millimètres et 5 millimètres, et plus préférablement entre 1,5 millimètres et 3,5 millimètres.

7. Procédé de fabrication d'une bouteille selon l'une quelconque des revendications 1 à 6, dans lequel le procédé comprend les étapes consistant à :
- transférer la préforme chauffée (1) dans un moule en forme de bouteille (6) ;
- étirer la préforme (1) le long de l'axe longitudinal au moyen d'une tige longitudinale (5) ; et
- mouler par soufflage de la préforme (1) en injectant de l'air en deux étapes de manière à faire s'étirer la préforme (1) chauffée et à lui faire prendre la forme du moule en forme de bouteille (6), l'air étant injecté à une première pression, puis à une seconde pression supérieure à ladite première pression.
